## Europäisches Patentamt
## European Patent Office
## Office européen des brevets

(19)

(11) Veröffentlichungsnummer: **0 126 393**
**B1**

(12) **EUROPÄISCHE PATENTSCHRIFT**

(45) Veröffentlichungstag der Patentschrift:
**06.04.88**

(51) Int. Cl.⁴: **B 27 B 33/04**

(21) Anmeldenummer: **84105333.3**

(22) Anmeldetag: **11.05.84**

(54) **Gattersäge mit Rückenbauch.**

(30) Priorität: **13.05.83 DE 3317406**

(43) Veröffentlichungstag der Anmeldung:
**28.11.84 Patentblatt 84/48**

(45) Bekanntmachung des Hinweises auf die Patenterteilung:
**06.04.88 Patentblatt 88/14**

(84) Benannte Vertragsstaaten:
**AT DE**

(56) Entgegenhaltungen:
**CH-A-482 516**
**DE-A-2 226 220**
**DE-A-2 654 625**
**DE-A-2 718 763**
**DE-C-290 551**
**DE-C-741 256**

(73) Patentinhaber: **Jansen- Herfeld, Röttger,
Königstrasse 144- 146, D-5630 Remscheid (DE)**

(72) Erfinder: **Jansen- Herfeld, Röttger, Königstrasse
144- 146, D-5630 Remscheid (DE)**

EP 0 126 393 B1

**Beschreibung**

Die Erfindung bezieht sich auf ein Gattersägeblatt mit ungleicher Breite und an einer Kante angeordneten Zähnen bzw. Schneidelementen. Die bisher bekannt gewordenen Sägeblätter wiesen in der Längsmitte eine geringere Breite als an den Enden auf, was den Nachteil hatte, daß diese Sägen in der Mitte, d. h. im Bereich ihrer größten Instabilität nicht optimal gespannt waren aufgrund der nur für eine Breite richtigen Lage der resultierenden Spannungslinie. Ferner sind Sägeblätter bekannt geworden, die in der Mitte eine größere Breite aufwiesen als an den Enden, was jedoch den Nachteil einer zu geringen spezifischen Spannung in der Zahnzone in diesem Bereich beinhaltete. Ferner sind Sägeblätter ungleicher Breite bekannt geworden, die Durchbrüche aufwiesen, die einmal die Reibung erhöhten und zum anderen die Sägeblätter gerade an den Enden schwächten, wo eine besonders große Eigensteifheit ohne Berücksichtigung der Spannkräfte erwünscht ist.

Der Erfindung liegt die Aufgabe zugrunde ein Sägeblatt zu schaffen ungleicher Breite, das einmal an den Einspannenden eine große Eigensteifheit aufgrund der Formgebung aufweist und zum anderen im Längsmittenbereich eine große Steifheit in der Zahnzone aufgrund der Einspannkräfte aufweist und trotz dieser Spannungserhöhung nur einen geringfügigen Bauch der Zahnspitzenlinie unter voller Belastung aufweist.

Dieses wird erfindungsgemäß dadurch erreicht, daß das Sägeblatt eine bauchige Form des Sägeblattrückens von mindestens 6 mm bei gerader Anordnung der Zahnschneiden aufweist. In der Nähe des Sägeblattrückens sind bei dem erfindungsgemäßen Sägeblatt Durchbrüche angeordnet, die alle ca. im gleichen Abstand zum Sägenrücken hin enden und eine unterschiedliche Länge in Sägeblattbreitenrichtung aufweisen, wobei diese Ausnehmungslänge in der Längsmitte des Sägeblattes am größten ist und jeweils zu den Enden hin abnimmt. Durch diese Anordnung der Durchbrüche entsteht eine spannungsmäßig gleich breite Rückenzone, die zum Rücken hin konvex gewölbt ist und dadurch beim Anspannen durch die Einspannkräfte möglichst eine gerade Form einnehmen möchte und damit das Sägeblatt im vorderen Bereich zur Zahnseite hin nach vorne drückt.

Dieser Vordrückeffekt gegen die Vorschubkräfte hat sein Maximum in der Sägeblattlängsmitte und nimmt stetig zu den Enden ab, so daß auf diese weise das Sägeblatt nur im Längsmittenbereich, in dem die Vorschubkräfte das Hauptbiegemoment bezogen auf die Einspannenden haben, zur Zahnkante, d. h. gegen die Vorschubkräfte hin gewölbt wird und erhält somit nur in einem kurzen, mittleren Längenbereich eine Wölbung in dieser Richtung, wenn die Einspannkräfte am Sägeblatt wirken.

Hierdurch wird erreicht, daß das Sägeblatt insgesamt gesehen nur eine geringfügige Wölbung der Zahnlinie im Einspannzustand aufweist und trotzdem eine hohe spezifische Spannung in der Zahnzone erhält, bei gleichzeitiger großer Steifheit an den Enden in der Nähe der Einspannquerschnitte.

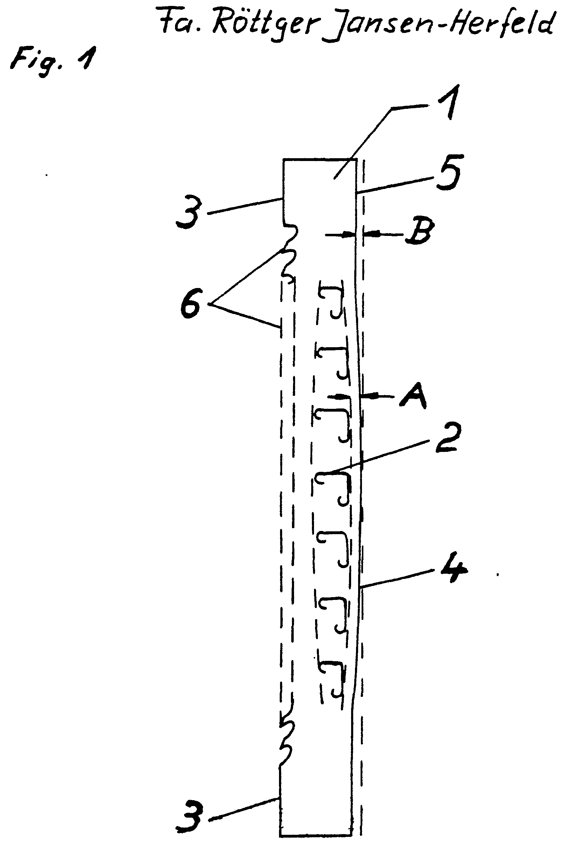

Figur 1 zeigt das Sägeblatt 1 in Seitenansicht mit den Durchbrüchen 2. Die Sägeblattenden weisen parallele Kanten 3 und 5 auf, wobei die Kante 3 eine Linie mit den Spitzen der Zähne 6 bildet. Das zum Sägeblattrücken weisende Ende der Durchbrüche 2 ist in etwa gleichem Abstand A zum Rückenbauch 4. Der Rückenbauch hat die Bogenhöhe B.

**Bezugszeichenliste**

1 Sägeblatt
2 Durchbrüche
3 Kopflängenbereich
4 Rückenbauch
5 Rückengerade
6 Zähne, Zahnlinie

A Abstand
B Bogenhöhe

**Patentansprüche**

1. Gattersägeblatt ungleicher Breite mit Durchbrüchen und an einer geraden Längskante angeordneten Zähne bzw. Schneidelemente dadurch gekennzeichnet, daß das Sägeblatt (1) einen Rückenbauch (4) von mindestens 6 mm Bogenhöhe (B) aufweist und daß im Rückenbereich Durchbrüche (2) angeordnet sind, deren Enden zum Rücken hin etwa gleichen Abstand zum Rückenbauch (4) aufweisen.

2. Sägeblatt nach Anspruch 1 dadurch gekennzeichnet, daß die Durchbrüche (2) in Sägeblattbreitenrichtung unterschiedliche Längen aufweisen, wobei die Durchbrüche (2) größter Länge im Blattmittenbereich angeordnet sind und von dort die Länge stetig zu den Sägeblattenden hin abnimmt.

3. Sägeblatt nach einem oder mehreren der Ansprüche 1 bis 2 dadurch gekennzeichnet, daß das Sägeblatt (1) an den beiden Enden einen Längenbereich (3) gleicher Breite aufweist.

4. Sägeblatt nach einem oder mehreren der Ansprüche 1 bis 3 dadurch gekennzeichnet, daß das Sägeblatt (1) an seiner die Zahnunn (6) aufweisenden Vorderkante an den ungezahnten Enden (3) eine Linie mit den Zahnspitzen (6) bildet.

5. Sägeblatt nach einem oder mehreren der Ansprüche 1 bis 4 dadurch gekennzeichnet, daß die Durchbrüch (2) eine maximale Schlitzbreite von 2 mm aufweisen.

6. Sägeblatt nach einem oder mehreren der Ansprüche 1 bis 5 dadurch gekennzeichnet, daß sich die Durchbrüche (2) in ihrer Länge in Sägeblattbreitenrichtung erstrecken und einen kürzeren Bereich in Längsrichtung des Sägeblattes haben.

7. Sägeblatt nach einem oder mehreren der Ansprüche 1 bis 6 dadurch gekennzeichnet, daß die Durchbrüche (2) an ihren Enden einen Teil eines Kreises oder einer Spirale bilden.

8. Sägeblatt nach einem oder mehreren der Ansprüche 1 bis 7 dadurch gekennzeichnet, daß der Rückenbauch (4) von einem Bogen und / oder Geraden gebildet wird, die an den beiden Enden in jeweils eine Gerade (5) übergehen, die parallel zur Zahnspitzenlinie (6) verläuft.

9. Sägeblatt nach einem oder mehreren der Ansprüche 1 bis 8 dadurch gekennzeichnet, daß der Rückenbauch (4) eine Bogenhöhe (B) von etwa 1 % der Sägeblattlänge aufweist.

## Claims

1. Gang saw blade of unequal breadth having perforations and teeth or cutting elements arranged at a straight longitudinal edge, characterized in that the saw blade (1) has a convex back (4) of at least 6 mm arc height (B), and that perforations (2) are arranged in the back region, the ends thereof facing towards the back beeing substantially equally spaced from the convex back (4).

2. Saw blade according to claim 1, characterized in that the perforations (2) have different lengths in the latidudinal direction of the saw blade, the perforations (2) of greatest length being arranged in the center region of the blade and the length continously decreasing from there towards the saw blade ends.

3. Saw blade according to one or some of claims 1 to 2, characterized in that the saw blade (1) comprises at both ends a longitudinal region (3) of equal breadth.

4. Saw blade according to one or some of claims 1 to 3, characterized in that at its front edge provided with a toothing (6), the saw blade (1) is at the non-toothed ends (3) in line with the tooth tips (6).

5. Saw blade according to one or some of claims 1 to 4, characterized in that the perforations (2) have a maximum slit breadth of 2 mm.

6. Saw blade according to one or some of claims 1 to 5, characterized in that the perforations (2) extend in their lengths in the latidudinal direction of the saw blade and have a shorter region in the longitudinal direction of the saw blade.

7. Saw blade according to one or some of claims 1 to 6, characterized in that the perforations (2) form at their ends a part of a circle or of a spiral.

8. Saw blade according to one or some of claims 1 to 7, characterized in that the convex back (4) is formed by an arc and/or by a straight line, which continue at both ends in a straight line (5), each, which extends parallel to the line of the tooth tips (6).

9. Saw blade according to one or some of claims 1 to 8, characterized in that the convex back (4) has an arc height (B) of about 1 % of the saw blade length.

## Revendications

1. Lame de scie alternative à châssis de largeur irrégulière avec fentes et, selon le cas des des dents ou des éléments coupants alignés sur une arrête longitudinale rectiligne, caractérisée par le fait que la lame de scie (1) présente un dos convexe (4) avec une hauteur d'arc (B) d'au moins 6 mm et que des fentes (2) au niveau du dos de la lame et dont les extrémités orientées vers le dos présentent pratiquement le même intervalle avec le dos convexe (4).

2. Lame de scie selon revendication 1 caractérisée par le fait que les fentes (2) présentent des longueurs différentes dans le sens de la largeur de la lame de scie, les fentes (2) les plus longues se trouvant au centre de la lame, la longueur de la fente allant en diminuant régulièrement en direction des extrémités de la lame.

3. Lame de scie selon une ou plusieurs des revendications 1 à 2 caractérisée par le fait que la lame de scie (1) présente à chaque extrémité une partie longitudinale (3) de même largeur.

4. Lame de scie selon une ou plusieurs des revendications 1 à 3 caractérisée par le fait que l'arête avant de la lame de scie (1), la ou se trouve la denture (6), forme une ligne avec les extrémités non dentées (3) et les pointes des dents (6).

5. Lame de scie selon une ou plusieurs des revendications 1 à 4 caractérisée par le fait que les fentes (2) présentent une largeur de fente maximale de 2 mm.

6. Lame de scie selon une ou plusieurs des revendications 1 à 5 caractérisée par le fait que les fentes (2) s'étendent dans leur longueur dans le sens de la largeur de la lame de scie et sont plus courtes dans le sens longitudinal de la lame.

7. Lame de scie selon une ou plusieurs des revendications 1 à 6 caractérisée par le fait que les fentes (2) forment une partie d'un cercle ou d'une spirale à leurs extrémités.

8. Lame de scie selon une ou plusieurs des revendications 1 à 7 caractérisée par le fait que le dos convexe (4) est formé par une courbe et/ou des lignes droites finissant chacune par une ligne droite (5) parallèle à la ligne des points des dents (6).

9. Lame de scie selon une ou plusieurs des revendications 1 à 8 caractérisée par le fait que le dos convexe (4) présente une hauteur d'arc d'environ 1 % de la longueur de la lame de scie.

Fa. Röttger Jansen-Herfeld

Fig. 1